# EUROPEAN PATENT APPLICATION

(11) **EP 4 523 522 A1**
(43) Date of publication of application: **19.03.2025**
(21) Application number: 23197514.5
(22) Date of filing: 14.09.2023
(51) Int. Cl.: A01K 13/00

(54) **A PROTECTIVE ARRANGEMENT AND METHOD FOR MONITORING**

(71) Applicant: Freelayer AB, 38693 Färjestaden (SE)
(72) Inventor: GUSTAFSSON, Linda, 38693 Färjestad (SE)
(74) Representative: AWA Sweden AB

(57) **Abstract**

The disclosure relates to a protective arrangement (1) for a horse, comprising a wearable protective cover (10, such as a horse blanket or horse clothing, the wearable protective cover (10) comprising: a top and a bottom surface (11, 12), the protective arrangement (1) further comprises a sensor arrangement (20) comprising: a temperature sensor arrangement (21) configured for measuring temperature and converting the measured temperature into a sensor signal, a humidity sensor arrangement (22) configured for measuring humidity and converting the measured humidity into a sensor signal, and a processing circuitry (40), arranged to be connected to said temperature sensor arrangement (21) and to said humidity sensor arrangement (22), wherein at least one of the temperature measuring surfaces (23) and the humidity measuring surface (24), in use, has a position on or within the cover (10) corresponding to a location above the croup of the horse or in the vicinity of that location.

## Description

### Field of invention

The invention relates to a protective arrangement for a horse.

The invention also relates to a method of monitoring parameters related to a horse.

### Technical Background

When designing a wearable protective cover for a horse, such as a blanket, the designer typically takes a plurality of design criteria in consideration. The protective cover should often be durable, withstand different types of weather, maintain a healthy climate between the cover and the horse, and cause no discomfort for the horse. Most horse blankets are designed to be optimal for specific whether condition and time of the year, leading to that a horse owner purchases several different horse blankets for different occasions. However, the differences between some blankets may be utterly small and blankets are therefore often purchased unnecessarily.

Another design criterion to consider when designing a protective cover is to understand for which purposes and at which conditions the protective cover is to be used, indoors/outdoors/during transportation and how the protective cover is to be designed to best provide for the needs of the horse. Another thing that may be of importance to consider is how to prolong the life time of such a protective cover when exposed to external factors.

Horses may spend a lot of time in the pastures, especially during summer when it is common that the horse spend both day and night outdoors, thus the horse is exposed to varying climates. During days where the weather is uncertain or changes rapidly it can be troublesome to know whether the horse should wear a blanket, and if so, which type. This may lead to the use of an unnecessary thick blanket or a blanket unable to withstand the weather conditions, whereby it may cause the horse discomfort and in worst case, the horse may get sick from e.g., overheating, or hypothermia.

Moreover, blankets which are mainly designed for being used indoor or during transportation are often adapted to wick moisture away and/or keep the horse warm.

Moreover, it is often desirable that the horse blanket is washable, and a horse blanket may be washed several times during its lifetime.

In US 2019150406 A1 there is disclosed a garment for an animal, such as a horse, the garment comprises sensors for monitoring the health and wellbeing of the animal, when, for example, the horse is sick and needs to be on box rest. The garment may, for example, measure the animals body temperature and/or the temperature in the surrounding environment of the animal. The garment may also comprise a moisture sensor, preferably galvanic skin response electrodes, for monitoring the moisture in the fur of the animal. The sensors are preferably mounted on the trunk or torso of the horse. When a horse is in its pasture it moves around, causing the blanket to move which leads to that it does not always stay in close contact with the horse's body. The garment does not adequately address the design criteria of effective placement of the sensors when wanting to monitor the climate under the blanket.

Moreover, the sensors of the garment do not adequately address the design criteria of not causing the horse any discomfort when moving around because of their placement and design.

Thus, there is still a need for a wearable protective cover adequately addressing at least some of the design criteria mentioned above.

### Summary of invention

It is an object of the invention to provide a wearable protective cover which overcomes or at least alleviates some or all of the drawbacks mentioned above.

This and other objects, which will be evident from the following description, are achieved by a protective arrangement for a horse having the features defined in claim 1.

According to a first aspect of the invention, a protective arrangement for a horse is provided, comprising a wearable protective cover for a horse, such as a horse blanket or horse clothing, the wearable protective cover comprising:
a top and a bottom surface arranged opposite each other, wherein said bottom surface is adapted to be arranged towards the horse when said wearable protective cover is in use,
a sensor arrangement comprising: a temperature sensor arrangement configured for measuring temperature and converting the measured temperature into an electric signal, wherein each temperature sensor arrangement is arranged within said wearable protective cover, and comprises at least one temperature measuring surface, wherein each one of said at least one temperature measuring surface coincides with said bottom surface or is arranged within said wearable protective cover, and
   - a humidity sensor arrangement configured for measuring humidity and converting the measured humidity into an electric signal, the humidity sensor arrangement which is arranged within said wearable protective cover, and comprises at least one humidity measuring surface, wherein each one of said at least one humidity measuring surface coincides with said bottom surface or is arranged within said wearable protective cover, and
wherein said protective cover arrangement further comprises a processing circuitry, arranged to be connected to said temperature sensor arrangement and to said humidity sensor arrangement and is further arranged to receive said sensor signals corresponding to said measured temperature and said measured humidity, wherein said processing circuitry is configured to convert said received sensor signals to temperature data and humidity data corresponding the temperature and humidity measured by said at least one temperature sensor arrangement and said at least one humidity sensor arrangement, respectively, and said processing circuitry is further configured to output said temperature data and said humidity data as a wireless signal,
wherein at least one of the temperature measuring surface and the humidity measuring surface, in use, has a position on or within the cover corresponding to a location above the croup of the horse or in the vicinity of that location.

An advantage of having the protective arrangement to measure the temperature and humidity between the horse and the wearable protective cover and output a wireless signal containing information about the measured climate is that a user is able to monitor the wellbeing of the horse, based on the monitored parameters, when said user is not in the presence of the horse or when to decide if the horse should be blanketed or not.

The user refers to the person which is normally to make use of the measured data, e.g., the horse owner or the groom or a driver.

The wearable protective cover may be a horse blanket or rug intended to keep the horse warm and/or protected from e.g., wind, rain and/or sun. The wearable protective cover may be designed for being used indoors and/or outdoor and optionally also during transportation. The wearable protective cover may be designed such that it covers the horse's body from chest to rump. The wearable protective cover may be a quarter sheet, covering the hindquarters of the horse or any other type of horse clothing.

The top surface of the wearable protective cover refers to the surface adapted to be arranged away from the horse when said wearable protective cover is in use. The wearable protective cover may comprise one or two, three or more layers of fabric and stuffing. The top and bottom surface of the wearable protective cover may be located on the opposite sides of the same layer or be located on different layers and face in opposite directions. The top surface may be referred to the surface arranged facing away from the horse of the outer layer of the wearable protective cover. The bottom surface of the wearable protective cover may be referred to the surface of the inner layer of the wearable protective cover that is arranged towards the horse.

It is to be noted that by the temperature sensor arrangement and the humidity sensor arrangement being arranged within the wearable protective cover refers to that at least some part of the temperature sensor arrangement and the humidity sensor arrangement is arranged within the wearable protective cover, e.g., between the top and bottom surface. However, some parts may be arranged, e.g., on the top or bottom surface.

In the case where the wearable protective cover comprises one layer of fabric the sensor arrangement may be arranged within the wearable protective cover such that the sensor arrangement is arranged in a through-going opening of the wearable protective cover. In such a design the sensor arrangement may be configured to cover said opening such that the wearable protective cover is sealed.

In an alternative embodiment, the wearable protective cover may partially be arranged with a single layer of fabric and partially be arranged with portions of an additional layer of fabric. The sensor arrangement may, in this alternative embodiment, be arranged within a through-going opening of the additional layer or between the first and the additional layer.

By the at least one sensor measuring surface being arranged within said wearable protective cover such that it coincides with said bottom surface or is arranged within said wearable protective cover, refers to that the at least one sensor measuring surface may be arranged within the wearable protective cover such that sensor measuring surface is relatively flush with the bottom surface or be arranged within the said wearable protective cover such that it is located in between the top and bottom surface. The sensor measuring surface may coincide with the bottom surface by e.g., being arranged within a recess or cutout in the wearable protective cover. The recess or cutout may have a shape corresponding to the size and shape of the sensor arrangement such that the sensor measuring surface is level with the bottom surface of the wearable protective cover, or optionally such that the sensor measuring surface is located in between the top and bottom surface.

The sensor measuring surface may be arranged within the wearable protective cover such that there is no layer of the wearable protective cover between the sensor measuring surface and the horse's body.

When the sensor measuring surface coincide with the bottom surface of the wearable protective cover, the sensor measuring surface may be intended to be arranged in contact with the horse, or arranged at a distance of 0.5 mm to 10 cm from the horse and preferably at a distance of 1 mm to 4 cm from the horse.

Alternatively, when the sensor measuring surface is located between the top and bottom surface of the wearable protective cover, the bottom surface of the wearable protective cover may be intended to be arranged in contact with the horse, or arranged at a distance of 0.5 mm to 10 cm from the horse and preferably at a distance of 1 mm to 4 cm from the horse.

In the case where the wearable protective cover comprises more than one sensor measuring surface a respective sensor measuring surface may be arranged at a position which is different relative to another respective sensor measuring surface. Put in other words, one sensor measuring surface may be arranged such that it coincides with the bottom surface and another sensor measuring surface may be arranged within the wearable protective cover. Each respective sensor measuring surface may be arranged in the same way within the wearable protective cover. What has been stated above with respect to the sensor measuring surface above is equally applicable to both the temperature measuring surface and the humidity measuring surface.

In the case where the wearable protective cover comprises more than one temperature measuring surface and/or humidity measuring surface, at least one respective temperature measuring surface and at least one humidity measuring surface has, in use, a position on or within the cover corresponding to a location above the croup of the horse or in the vicinity of that location. The other temperature measuring surface and/or humidity measuring surface may respectively have a position on or within the wearable protective cover corresponding to another location of the horse. However, it is to be noted that the position of the multiple temperature measuring surfaces and/or humidity measuring surfaces may be approximately the same, e.g., on the left and right side of the croup.

The sensor arrangement may be attached within the wearable protective cover by fastening means such as Velcro or glue or stitches or straps or other fastening means.

The sensor arrangement may be attached to the wearable protective cover by being sewn to one or more layers of the wearable protective cover or placed in sensor channels or recesses provided in the wearable protective cover. According to one example, the wearable protective cover comprises channels and/or recesses arranged for housing the sensor arrangement.

In relation to this invention the term sensor signal may refer to any detectable physical quantity or impulse (such as a voltage, current, frequency, inductance or magnetic field strength, the list is not exhaustive) by which messages or information can be transmitted from the sensor. The sensor signal is preferably selected from a group comprising electric signals, magnetic signal, optical signals and combinations thereof. In more detail the sensor signal may e.g. be a low level signal, where e.g. different voltage levels corresponds to different senor readings, or the sensor signal may e.g. a higher level signal, such as data handled by e.g. a processor where different data values correspond to different sensor readings.

It is to be understood that the wireless signal which is an output of the processing circuitry may be retrieved by a user device to display the temperature data and said humidity data to a user.

By the at least one of the temperature measuring surfaces and at least one of the humidity measuring surfaces, in use, having a position on or within the cover corresponding to a location above the croup of the horse or in the vicinity of that location, e.g., the loin, provides that the measuring surfaces measures the temperature and humidity at a location where the horse is most exposed to ,e.g., rainfall, snowfall, and sunlight. Horses often turn their hindquarters towards the rain and/or wind, making this area highly exposed. Thus, an advantage of having the measuring surfaces located in vicinity of the croup and loin of the horse is that the protective arrangement allows for monitoring the climate between the horse and the wearable protective cover at a location where an undesirable climate may be detected first. Other locations on the horse may be used to the same advantage. It is to be noted that the vicinity of the croup refers to the hindquarters of the horse. The sensor arrangement may be positioned in the wearable protective cover along an extension corresponding to the extension of the spine of the horse, or in vicinity of the spine, e.g., in a direction transversally extending about 1-20 cm relative to the spine of the horse.

Another advantage of the protective arrangement is that the temperature measuring surface and the humidity measuring surface coincides with the bottom surface of the wearable protective cover or is arranged within said wearable protective cover such that the respective sensors does not cause any discomfort to the horse. Thus, the horse is able to move around, e.g., in its pasture or box, roll, lay down, and maintain its natural behaviors while the protective arrangement is able to monitor the environment between the horse and the wearable protective cover.

It is to be understood that other types of sensor arrangements may be arranged within the wearable protective cover such as a heart rate sensor.

The sensor arrangement may be a self-contained unit, which self-contained unit comprises both said temperature sensor arrangement and said humidity sensor arrangement, and wherein said temperature measuring surface and said humidity measuring surface optionally are one and the same. By having the sensor arrangement as a self-contained unit, the sensor arrangement is user friendly, and an insertion and removal of the sensor arrangement is facilitated.

Preferably, the temperature sensor arrangement and/or the humidity sensor arrangement are flexible. A flexible temperature sensor arrangement and/or humidity sensor arrangement is advantageous as it can follow the horse's movement and body curvature. The temperature sensor arrangement and/or the humidity sensor arrangement may for example be screen printed on flexible strips. The flexible characteristics and the use of printed electronics provides a product that is less prone to cause the horse discomfort. According to one example, the sensor arrangement comprises one or more flexible strips at which said temperature sensor arrangement and/or said humidity sensor arrangement is attached.

The sensor arrangement may comprise a first and a second measurement surface, wherein each of said first and second measurement surface is a temperature measurement surface and/or a humidity measurement surface,
wherein said first temperature measurement surface, in use, has a position on or within the cover corresponding to a location above the croup of the horse or in the vicinity of that location, and said second measurement surface, in use, has a position on or within the cover corresponding to a location in the vicinity of the withers of the horse.

An advantage of having temperature and/or humidity measuring surfaces located on at least two different locations of the horse, e.g., the croup and the withers, the protective arrangement may collect temperature data and humidity data from two different measuring areas. The data collected from one of the measuring areas can be used as reference data which the data collected from the other the measuring area can be compared with. In one embodiment the second measurement surface may be used to measure temperature and/or humidity which is to be used as reference data. In another embodiment the first measurement surface may be used to measure temperature and/or humidity which is to be used as reference data.

It may be advantageous to collect reference data from an area of the horse, which is less exposed to the surrounding environmental conditions, e.g., in vicinity of the withers of the horse. In vicinity of the withers refers to an area corresponding to a location of the horse that surrounds the withers, i.e., the shoulders, back and lower parts of the neck.

The temperature sensor arrangement and/or the humidity sensor arrangement may comprise a carrier or enclosure, which carrier or enclosure is made of PET, TPU, or Kaptone and wherein said carrier or enclosure is optionally at most 8 mm in a direction orthogonal to said bottom surface.

The carrier or enclosure protects the temperature and humidity sensor arrangement from external factors and impacts from e.g., when the horse rolls. The carrier or enclosure does not affect the measuring abilities of the sensor arrangement.

The sensor arrangement may be adapted and configured to be detached from, and optionally reattached to, the wearable protective cover, wherein the attachment of sensor arrangement to the wearable protective cover is optionally arranged such that a removal of sensor arrangement leaves an opening is said bottom surface.

The sensor arrangement may be attached to the wearable protective cover by fastening means such as Velcro or a pocket adapted to hold the sensor arrangement in place. Such fastening means allows the sensor arrangement to easily be detached from the wearable protective cover.

By having the sensor arrangement to be detachable from the wearable protective cover the sensor arrangement can be removed from the wearable protective cover when the cover is to be washed. This may prolong the lifetime of the sensor arrangement.

The protective arrangement may further comprise an interface for allowing external sensors to be connected and to interact with the protective arrangement. By having the possibility to connect external sensors to the protective arrangement provides for a flexible modular setup. Specific sensors that may only be needed during certain occasions, e.g., sensors for measuring movements or body temperature, can be attached to the protective arrangement during those times without the need of replacing the protective arrangement with another specific protective arrangement where those specific sensors would be included. The external sensors may be positioned at a location on the wearable protective cover close to the sensor arrangement or be positioned at a different location.

The external sensors could be connected to the protective arrangement by placing them in, e.g., existing sensor channels or by means of Velcro or pins.

The external sensor may be connected to the processing circuitry of the protective arrangement such that the sensor signals converted by the external sensor can be converted by the processing circuitry into data corresponding to the factor that the external sensor measures.

The external sensor may comprise its own processing circuitry which is configured to convert and output the data measured by the external sensor.

The protective arrangement may further comprise a rechargeable battery and/or at least one solar cell adapted and configured for powering said temperature sensor arrangement and said humidity sensor arrangement. The rechargeable battery may be recharged when the protective cover is not used.

The rechargeable battery may be detachable from the wearable protective cover such that the battery can be charged, and the wearable protective cover may be used in the meantime, but without the function of the sensors.

The protective may be powered by primary batteries which are replaced when the primary battery is exhausted.

In the case when the protective arrangement is powered by at least one solar cell, the solar cells are preferably designed and placed such that they do not cause the horse any discomfort. The solar cell may, in use, have a position on the wearable protective cover corresponding to a location at the tail, e.g., on the tail cover of the protective cover, or in vicinity of that location. It is to be understood that the solar cell may have any other suitable position on the protective cover.

The solar cells may coincide with the top surface or be arranged within the wearable protective cover beneath a transparent part of the top surface.

The wearable protective cover may comprise a heart rate sensor arrangement, the heart rate sensor arrangement comprises at least one heart rate measuring surface, which at least one heart rate measuring surface is arranged on or within said wearable protective cover, and
wherein the at least one hart rate measuring surface, in use, has a position on or within the wearable protective cover corresponding to a location behind one of the front legs of the horse or in the vicinity of that location.

The wearable protective cover may have a front part that extends from the withers, along the shoulders and chest on both sides of the horse and between the front legs and behind the elbow of the horse. The front part is connected to the rear part of the wearable protective cover at the withers and behind the front legs at the area of where the saddle-girth often is placed. The front part of the wearable protective cover is suitable for placement of the heart rate sensor considering the anatomy of a horse and since the design of the front part allows the part to come in close contact with the horse's body at a location where conventional horse blankets does not reach.

The at least one hart rate measuring surface, in use, may have a position on or within the wearable protective cover corresponding to a location on the chest of the horse or in the vicinity of that location.

The heart rate sensor arrangement is configured for measuring the heart rate of the horse and convert the measured heart rate into a sensor signal. The heart rate sensor may be connected to the same processing circuitry as the temperature sensor arrangement and humidity sensor arrangement or to a separate processing circuitry. The processing circuitry may convert the sensor signal to heart rate data and output said data as a wireless signal.

The wearable protective cover may comprise a respiratory rate sensor arrangement. The respiratory rate sensor arrangement may have the same placement as the heart rate sensor arrangement described above.

Measuring the heart rate and/ or respiratory rate may be useful when the horse is unwell and needs to be closely monitored or horses used in high performance sports and where the horse's recovery may be interesting to monitor. By having the sensor arrangement for measuring heart rate and/or respiratory rate integrated within the wearable protective cover it allows for a compact design and the horse is not disturbed by any additional equipment that may cause the horse stress and discomfort in a situation where the horse is in need of an extra peaceful surrounding.

According to a second aspect, there is provided a method for monitoring the wellbeing of a horse or monitoring parameters related to a horse, wherein the method comprises:
- providing a horse with a protective arrangement of the kind disclosed above,
- outputting said temperature data and said humidity data as a wireless signal from said protective arrangement,
- receiving temperature and humidity information at a user device, which temperature and humidity information is based on temperature data and said humidity data, which user device presents said temperature and humidity information to a user.

The advantages of the various features have been discussed above with reference to the protective arrangement and those advantages are equally applicable with reference to the method. Also, the various variants discussed with reference to the protective arrangement are equally applicable to the method.

Further, the user device may be used to set threshold values of when the user device is to alert the user of reached limits.

The protective arrangement may output data regarding the battery level of the battery of the protective arrangement as a wireless signal which the user device receives and presents to the user. This allow the user to know when battery needs to be replaced or recharged.

The method and the step of receiving said temperature and humidity information at a user device may comprise the step of:
- receiving said wireless signals at a server,
- converting said wireless signals to temperature and humidity information,
- outputting said temperature and humidity information from said server to said user device.

The user device may be a dedicated horse monitoring device, a mobile phone, a laptop or stationary computer.

According to a third aspect, there is provided a system comprising:
a protective arrangement configured to output wireless signals based on the temperature data and the humidity data measured by the sensor arrangement,
a user device configured to receive said wireless signal and present said temperature and humidity data to a user.

The advantages of the various features have been discussed above with reference to the protective arrangement and those advantages are equally applicable with reference to the system. Also, the various variants discussed with reference to the protective arrangement are equally applicable to the system.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

The invention may also in short be said to relate to a protective arrangement for a horse, comprising a wearable protective cover, such as a horse blanket or horse clothing, the wearable protective cover comprising: a top and a bottom surface, the protective arrangement further comprises a sensor arrangement comprising: a temperature sensor arrangement configured for measuring temperature and converting the measured temperature into a sensor signal, a humidity sensor arrangement configured for measuring humidity and converting the measured humidity into a sensor signal, and a processing circuitry, arranged to be connected to said temperature sensor arrangement and to said humidity sensor arrangement, wherein at least one of the temperature measuring surfaces and the humidity measuring surface, in use, has a position on or within the cover corresponding to a location above the croup of the horse or in the vicinity of that location.

### Brief description of the drawings

The invention will by way of example be described in more detail with reference to the appended schematic drawings, which shows a presently preferred embodiment of the invention.
Figure 1a-c show different perspective views of a wearable protective arrangement arranged on a horse.
Figure 2 illustrates one example of a sensor arrangement outside the wearable protective cover, e.g., before or after being arranged within the wearable protective cover.
Figure 3a shows a bottom view of the wearable protective cover shown in Fig. 1, in a flat laid state, which bottom view shows the bottom surface of the wearable protective cover including the sensor arrangement of Figure 2 when arranged within the wearable protective cover.
Figure 3b-c, show examples of the sensor measuring surface arranged within the wearable protective cover.
Figure 4a-c show examples of the areas on the horse where measurements by a sensor arrangement, located in the wearable protective cover, may be to be performed.
Figure 5a-b schematically shows examples of suitable measuring areas for the sensor arrangement.
Figure 6 shows a top view of the wearable protective arrangement, shown in Fig. 1b, in a flat laid state, which top view shows the top surface of the wearable protective cover.
Figure 7shows parts of the wearable protective cover in a preassembled state.
Figure 8 show a flow chart that illustrates a method for monitoring parameters related to a horse .

### Detailed description of preferred embodiments

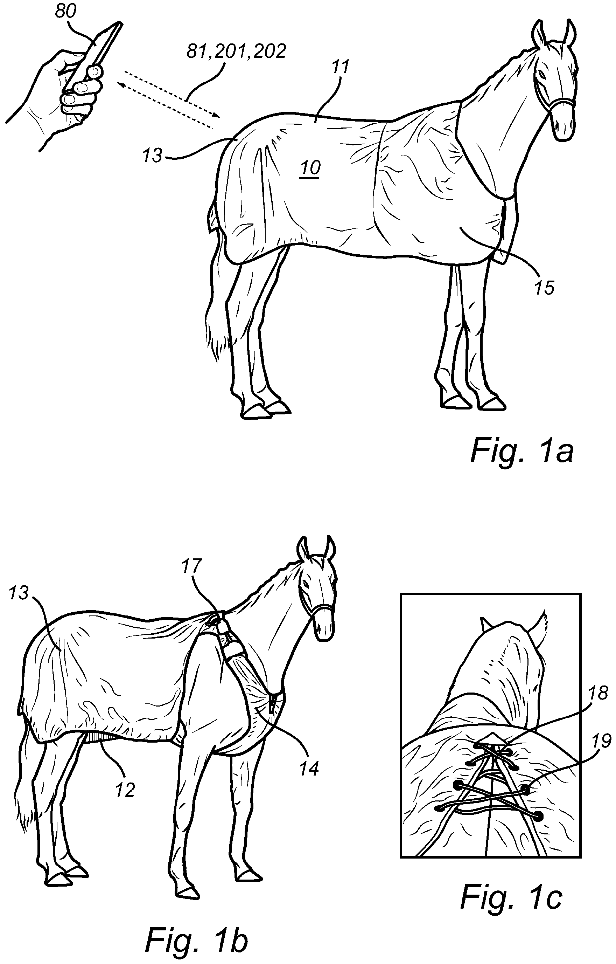

With reference to Figs. 1-8, there is disclosed a protective arrangement for a horse comprising a wearable protective cover which comprises a sensor arrangement for measuring the temperature and humidity between the horse and the wearable protective cover. There is also disclosed a system comprising the protective arrangement 1 and the user device 80.

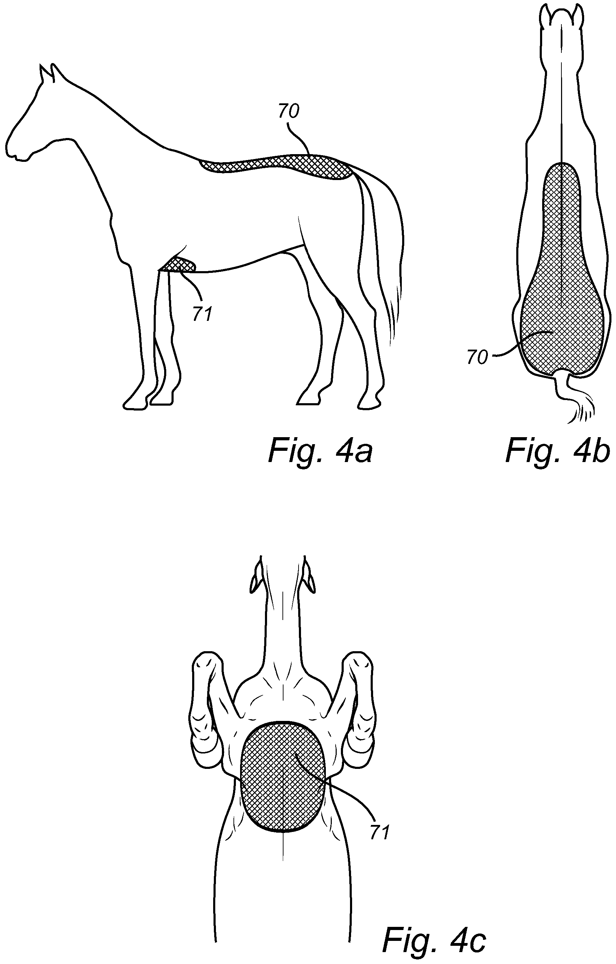

Figs. 1a-c show the protective arrangement arranged on a horse. The protective arrangement is preferably designed according to the specific needs at hand, and may therefor deviate from the embodiment shown in this and the following figures. The protective cover shown in Figs.1a-c is described in more detail in relation Fig.4.

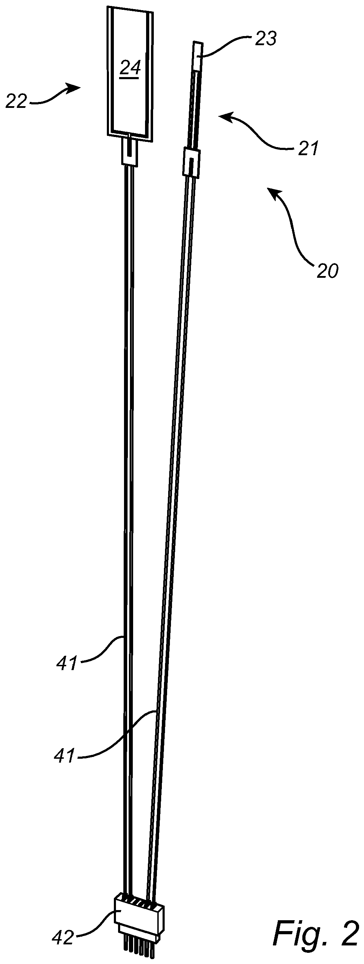

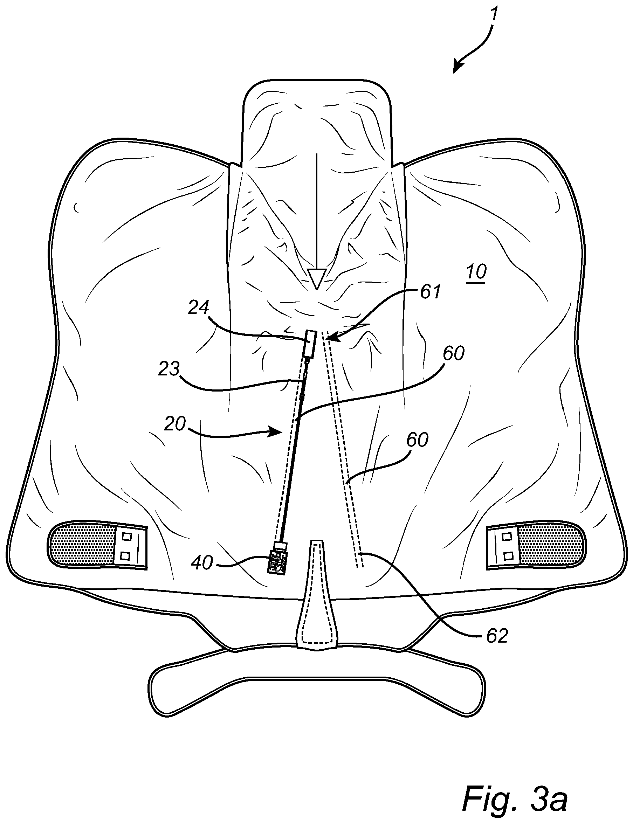

The wearable protective cover 10 comprises a top and a bottom surface 11, 12 arranged opposite each other, wherein said bottom surface 12 is adapted to be arranged towards the horse when said wearable protective cover 10 is in use, as shown in Fig. 1b. The sensor arrangement 20 comprising a temperature sensor arrangement 21 and a humidity sensor arrangement 23, as shown in Fig. 2, are configured for measuring temperature and humidity, and converting the measured temperature and humidity into a sensor signal. The temperature arrangement 21 and the humidity arrangement 23 are arranged within said wearable protective cover 10 such that the temperature measuring surface 23 and the humidity measuring surface 24 coincides with said bottom surface 12 or is arranged within said wearable protective cover 10. The sensor arrangement 20 arranged within the wearable protective cover 10 is described in more detail in relation to Figs. 3a-c.

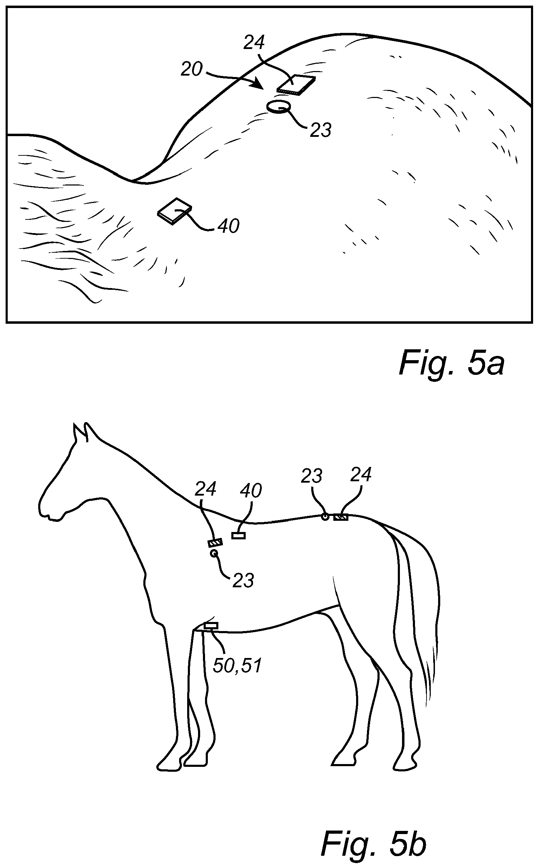

The temperature measuring surface 23 and the humidity measuring surface 24, in use, has a position on or within the cover 10 corresponding to a location above the croup of the horse or in the vicinity of that location, as shown in Fig. 4a-b and 5a-b.

The top surface 11 of the wearable protective cover 10 refers to the surface adapted to be arranged away from the horse when said wearable protective cover is in use. The wearable protective cover 10 may comprise one or two, three or more layers of fabric and stuffing. The wearable protective cover shown in Figs. 1a-c, comprises two layers of fabric, an outer layer with the top surface 11 arranged away from the horse, and an inner layer with the bottom surface 12 arranged at an underside of the wearable protective cover 10 and is arranged towards the horse when in use.

In a preferred embodiment, the temperature sensor arrangement 21 and/or the humidity sensor arrangement 23 are flexible. By being flexible it refers to that the temperature sensor arrangement 21 and/or the humidity sensor arrangement 23 is advantageous as it can follow the horse's movement and body curvature. The temperature sensor arrangement 21 and/or the humidity sensor arrangement 23 may for example be screen printed on flexible strips. The flexible characteristics and the use of printed electronics provides a product that is less prone to cause the horse discomfort. According to one example, not shown in any of the figures, the sensor arrangement 20 comprises one or more flexible strips at which said temperature sensor arrangement 21 and/or said humidity sensor arrangement 23 is attached.

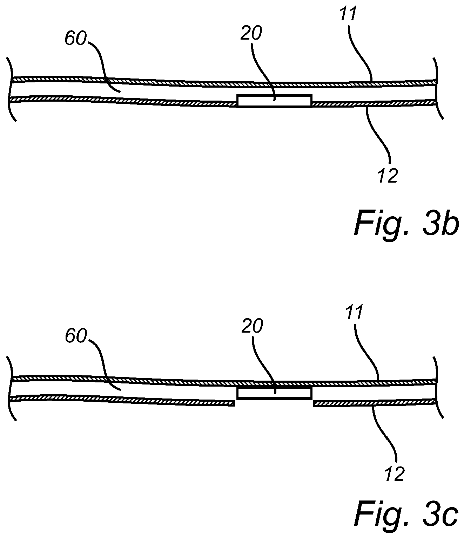

A user device 80 is shown in Fig. 1a, the user device 80 is configured to receive a wireless signal 81 from the processing circuitry 40, shown in Fig. 3, and display or output the temperature data and said humidity data to a user.

The user device 80 may be a dedicated horse monitoring device, a mobile phone, a laptop or stationary computer or any device equipped to receive the wireless signals 81 and output information corresponding the received data, e.g., in the form of visual and/or audio information.

It is to be understood that the user device 80 may output signals to the protective arrangement 1, such as threshold values. The threshold values may be used when the user device is to alert the user of reached limits.

According to one example, not shown in any of the figures, the protective arrangement 1 may comprise an interface for allowing external sensors to be connected and to interact with the protective arrangement 1. By having the possibility to connect external sensors to the protective arrangement 1 provides for a flexible modular setup. Specific sensors that may only be needed during certain occasions, e.g., sensors for measuring movements or body temperature, can be attached to the protective arrangement 1 during those times without the need of replacing the protective arrangement 1 with another specific protective arrangement where those specific sensors would be included. The external sensors may be positioned at a location in the wearable protective cover 10 close to the sensor arrangement 20 or be positioned at a different location.

The external sensors could be connected to the protective arrangement 1 by placing them in, e.g., existing sensor channels 60 or by means of Velcro or pins.

The external sensor may be connected to the processing circuitry 40 of the protective arrangement 1 such that the sensor signals converted by the external sensor can be converted by the processing circuitry 40 into data corresponding to the factor that the external sensor measures.

The external sensor may comprise its own processing circuitry which is configured to convert and output the data measured by the external sensor.

In another embodiment, not shown in any of the figures, the protective arrangement 1 may further comprise a rechargeable battery and/or at least one solar cell adapted and configured for powering said temperature sensor arrangement 21 and said humidity sensor arrangement 23. The rechargeable battery may be recharged when the protective cover 10 is not used.

The rechargeable battery may be detachable from the wearable protective cover 10 such that the battery can be charged, and the wearable protective cover 10 may be used in the meantime, but without the function of the sensors. In an embodiment where the protective arrangement 1 is powered by at least one solar cell, the solar cells are preferably designed and placed such that they do not cause the horse any discomfort. The solar cell may, in use, have a position on the wearable protective cover 10 corresponding to a location of the tail of the horse, e.g., on the tail cover 18 of the protective cover 10, or in vicinity of that location. It is to be understood that the solar cell may have any other suitable position on the protective cover 10. The solar cells may coincide with the top surface 11 or be arranged within the wearable protective cover 10 beneath a transparent part of the top surface 11.

With reference to Fig. 2 the sensor arrangement 20 comprises one temperature sensor arrangement 21 and one humidity sensor arrangement 23 configured for measuring temperature and humidity between the wearable protective cover 10 and the horse's body. The temperature sensor arrangement 21 comprises one temperature measuring surface 23 and the humidity sensor arrangement 23 comprises one humidity measuring surface 24. The temperature sensor arrangement 21 and one humidity sensor arrangement 23 are connected in parallel by a connection wire 41 to a connection part 42 arranged to be connected with the processing circuitry 40, as shown in Fig. 3. The temperature measuring surface and/or humidity measuring surface may in another embodiment be connected in series.

The protective arrangement 1 may comprise more than one sensor arrangement. In such an embodiment the sensor arrangements 20 may be arranged to be connected to the same processing circuitry 40, or a respective processing circuitry 40.

The sensor arrangement 20 may comprise more than one temperature measuring surface 23 and/or humidity measuring surface 24, not shown in any of the figures. The multiple temperature measuring surfaces 23 and/or humidity measuring surfaces 24 may be connected to the processing circuitry in series or in parallel.

In another embodiment, the temperature measuring surface and the humidity measuring surface may be one and the same measuring surface.

With reference to Figs. 3a, the wearable protective cover is in a flat-laid state and viewed from the bottom side. The temperature sensor arrangement 21 and the humidity sensor arrangement 22 are arranged within the wearable protective cover 10 between the top 11 and bottom surface 12. However, some parts may be arranged, e.g., on the top or bottom surface.

The wearable protective cover comprises two sensor channels 60 which may be formed i.e., by two parallel seams which extends through the outer and inner layer. The sensor channels 60 are arranged such that the sensor arrangement and the processing circuitry 40 may be inserted therein, i.e., between the outer and inner layer of the wearable protective cover 10. The sensor arrangement 20, and/or the processing circuitry 40, may be adapted and configured to be detached from, and optionally reattached to, the wearable protective cover 10, by removing the sensor arrangement 20 from the senor channel 60 and thereafter it may be reinserted into the sensor channel 60.

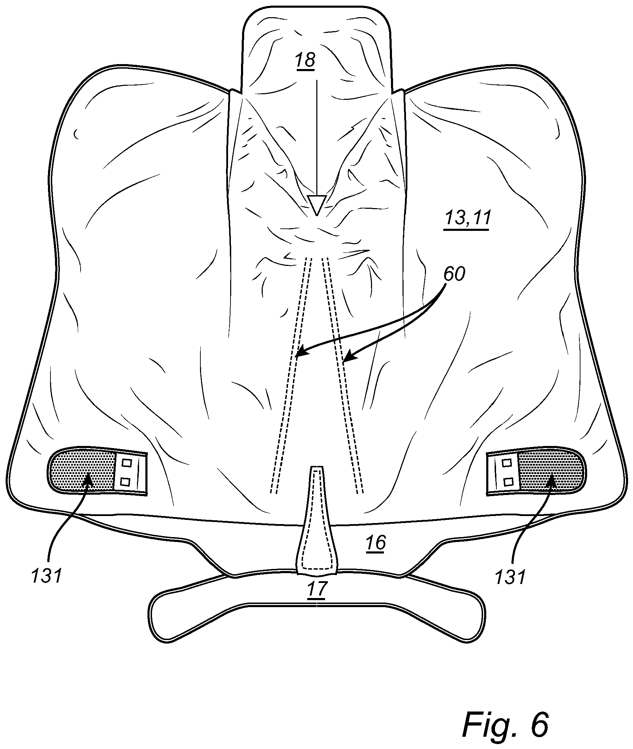

The sensor channels 60, as shown in Figs. 3a and 6, extend from a front portion of the wearable protective cover 10 corresponding to a location in vicinity of the withers towards a rear portion corresponding to the location of the hindquarters of the horse. The sensor channels 60 are angularly displaced in relation to each other such that they form a V-shape. In another embodiment, not shown in any of the figures, the sensor channels 60 may extend in parallel with each other.

The senor channels 60 may have an opening at a first and second end portion 61, 62 such that the sensor arrangement 20 may be inserted into the sensor channel 60. In another embodiment, the sensor channels may have one closed end portion and one open end portion. The openings of the respective senor channel 60 are arranged within the bottom surface 12 of the wearable protective cover 10. However, in another embodiment, the openings may be arranged within the top surface 11 of the protective cover 10.

In another embodiment, there may be only one sensor channel 60 or there may be more than two sensor channels 60.

As shown in Fig. 3a, the sensor arrangement 20 shown in Fig. 2, is inserted into one of the sensor channels 60 arranged within the protective cover 10. The temperature sensor arrangement 21 and one humidity sensor arrangement 23 are arranged within the sensor channel 60 at a first end portion 61 of the sensor channel 60 which is arranged at the rear portion of the wearable protective cover 10. However, it is to be understood that the temperature sensor arrangement 21 and one humidity sensor arrangement 23 may, in another embodiment, be arranged within the sensor channel 60 at a second end portion 62 of the sensor channel 60 which is arranged at the front portion of the wearable protective cover 10.

It is to be understood that the sensor arrangement 20, shown in Fig. 3a, may be placed withing the other sensor channel 60 as well.

In another embodiment, not shown in any of the figures, a sensor arrangement 20 and/or a processing circuitry 40 may be placed within each respective sensor channel 60.

The processing circuitry 40, which is connected to the temperature sensor arrangement 21 and the humidity sensor arrangement 22, is arranged within the sensor channel 60 at a second end portion 62 thereof. However, in another embodiment, the processing circuitry 40 may be placed along the sensor channel 60 at another position or be placed outside the sensor channel 60.

Figure 3b and 3c are schematic cross sectional views of the wearable protective cover. As shown in Fig. 3b the sensor arrangement 20 may be arranged within the wearable protective cover 10 such that the measuring surface 23,24 is arranged within said wearable protective cover such that it coincides with the bottom surface 12. Alternatively, as shown in Fig. 3c the measuring surface 23,24 of the sensor arrangement 20 may be arranged such that it is arranged within said wearable protective cover 10 and not flush with the bottom surface. As shown in Fig. 3b, the at least one measuring surface 23,24 is arranged within the wearable protective cover such that temperature measuring surface 23,24are flush or substantially flush with the bottom surface. As shown in Fig. 3c the measuring surface 23,24 is are arranged within the said wearable protective cover such that is located in between the top and bottom surface.

The temperature measuring surface 23 and the humidity measuring surface 24 may coincide with the bottom surface by e.g., being arranged within a recess or cutout in the wearable protective cover, as seen in Fig. 3b. The recess or cutout may have a shape corresponding to the size and shape of the temperature sensor arrangement such that the temperature measuring surface is level with the bottom surface of the wearable protective cover, or optionally such that the temperature measuring surface is located in between the top and bottom surface, as seen in Fig. 3c. The recess or cutout may be an opening different from the opening described above in relation to the insertion and detachment of the sensor arrangement 20 or the recess or cutout may be the same as the opening.

The temperature measuring surface 23 and the humidity measuring surface 24 may be arranged within the wearable protective cover 10 such that there is no layer of the wearable protective cover between the temperature measuring surface and the horse's body.

When the temperature measuring surface 23 and the humidity measuring surface 24 coincide with the bottom surface 12 of the wearable protective cover 10, as shown in Fig. 3b, the temperature measuring surface 23 and the humidity measuring surface 24 may be intended to be arranged in contact with the horse, or arranged at a distance of 0.5 mm to 10 cm from the horse and preferably at a distance of 1 mm to 4 cm from the horse.

Alternatively, when the temperature measuring surface 23 and the humidity measuring surface 24 is located between the top and bottom surface of the wearable protective cover, as seen in Fig. 3c, the bottom surface 12 of the wearable protective cover 10 may be intended to be arranged in contact with the horse, or arranged at a distance of 0.5 mm to 10 cm from the horse and preferably at a distance of 1 mm to 4 cm from the horse.

In an embodiment where the wearable protective cover 10 comprises more than one temperature measuring surface 23 and/or more than one humidity measuring surface 24, a respective temperature measuring surface 23 and/ or humidity measuring surface 24 may be arranged at a position which is different relative to another respective temperature measuring surface 23 or humidity measuring surface 24. Put in other words, one temperature measuring surface 23 or one humidity measuring surface 24 may be arranged such that it coincides with the bottom surface and another temperature measuring surface 23 or humidity measuring surface 24 may be arranged within the wearable protective cover 10. Each respective temperature measuring surface 23 or humidity measuring surface 24 may be arranged in the same way within the wearable protective cover 10.

According to one example, not shown in any of the figures, the sensor arrangement 20 and/or processing circuitry 40 may be attached within the wearable protective cover 10 by fastening means such as Velcro, glue, stitches, straps, or other fastening means. The sensor arrangement 20 and/or the processing circuitry 40 may be attached to the wearable protective cover 10 by being sewn to one or more layers of the wearable protective cover 10. The attachment of the sensor arrangement 20 and/or the processing circuitry 40 to the wearable protective cover 10 is optionally arranged such that a removal of the sensor arrangement 20 and/or the processing circuitry 40 leaves an opening is said bottom surface 12.

The processing circuitry 40, shown in Fig. 3a, is configured to receive sensor signals corresponding to the measured temperature and the measured humidity, wherein said processing circuitry 40 is configured to convert said received sensor signals to temperature data and humidity data corresponding the temperature and humidity measured by said at least one temperature sensor arrangement 21 and said at least one humidity sensor arrangement 22, respectively, and said processing circuitry 40 is further configured to output said temperature data and said humidity data as a wireless signal 81.

In relation to this invention the term sensor signal may refer to any detectable physical quantity or impulse (such as a voltage, current, frequency, inductance or magnetic field strength, the list is not exhaustive) by which messages or information can be transmitted from the sensor. The sensor signal is preferably selected from a group comprising electric signals, magnetic signal, optical signals and combinations thereof. In more detail the sensor signal may e.g., be a low level signal, where e.g. different voltage levels corresponds to different senor readings, or the sensor signal may e.g. a higher level signal, such as data handled by e.g. a processor where different data values correspond to different sensor readings.

The sensor arrangement 20 may be a self-contained unit, which self-contained unit comprises both said temperature sensor arrangement 21 and said humidity sensor arrangement 22, and wherein said temperature measuring surface 23 and said humidity measuring surface 24 optionally are one and the same.

With reference to Figs. 4a-c, the areas of the horse where the temperature and the humidity may be measured and an area where the heart rate and respiratory rate may be measured is shown. The temperature and humidity measuring area 70 corresponds to an area extending along the upper portion of the horse. The upper portion extends from the withers along the spine towards the root of the tail. This area of the horse is highly exposed to the different weather conditions. A suitable heart- and respiratory rate measuring area 71, where the anatomy of the horse is considered, is behind the frontal legs. In a embodiment, not shown in any of the figures, the heart rate and respiratory rate may be measured at a location corresponding to the chest.

As shown in Figs. 1a-c, the wearable protective arrangement is arranged on a horse. Fig. 1a, show how one embodiment of the wearable protective arrangement is arranged when all parts of the wearable protective cover are assembled. The rear part of the wearable protective cover extends in a length extension from the withers and along the body of the horse to the tail and covers the temperature and humidity measuring area 70, as shown in Figs. 4a-b. The rear part 13 has a width extension extending from a free end of the wearable protective cover arranged, when used, on one side of the horse to a free end of the wearable protective cover 10 arranged at the other side of the horse. The free ends of the wearable protective cover 10 may be approximately level with the lower parts of the belly of the horse. In alternative embodiments the wearable protective cover 10 may be longer than the one shown in Fig 1a, i.e., extending closer to the ground and e.g., be in level with the knees of the horse or at a level between the knees and the belly of the horse. Alternatively, the wearable protective cover 10 may be shorter than the one shown in Fig 1a, e.g., extending only to a level half way between the belly and the top of the horse or at a level between the top and the belly of the horse. Optionally, the rear part 13 is connected to the front part 14 at a location at the withers and behind the front legs at the area of where the saddle-girth often is placed, as seen in Fig. 1b. The neck part 15 of the wearable protective cover 10 is preferably connected to the front part 14 and covers the withers and shoulders of the horse. As shown in Fig. 1b, the front part of the wearable protective cover may optionally extend from the withers, along the shoulders and chest on both sides of the horse and between the front legs and behind the elbow of the horse. The front part 14 may extend over the suitable heart- and respiratory rate measuring area 71, which will be described in more detail in relation to Fig. 5b. The design of the front part, shown in Figs. 1b and 3, allows the front part to come in close contact with the horse's body at a location where conventional horse blankets does not reach.

With reference to Figs. 5a-b, an example of a suitable measurement area of the sensor arrangement 20 and a suitable position of the processing circuitry 40 is shown. It is to be understood that the suitable measurement areas and positions are to be corresponding to a position within the wearable protective cover 10.

As shown in Fig. 5a, a sensor arrangement 20 comprising one temperature measuring surface 23 and one humidity measuring surface 24 are located in vicinity of the croup of the horse.

The temperature measuring surface 23 and one humidity measuring surface 24 may in another embodiment be positioned at another position within the temperature and humidity measuring area 70, as shown in Figs. 4a-b.

In Fig. 5b, there is shown the placement of a sensor arrangement comprising two temperature measuring surfaces 23 and two humidity measuring surface 24. Wherein one temperature measuring surface 23 and one humidity measuring surface 24 are located in vicinity of the croup of the horse and another temperature measuring surface 23 and another humidity measuring surface 24 are located in vicinity of the withers of the horse.

The data collected from one of the temperature measuring surfaces 23 and one of the humidity measuring surfaces 24 may be used as reference data which the data collected from the other respective measuring surface can be compared with.

In another embodiment, not shown in any of the figures, the position of the multiple temperature measuring surfaces and/or humidity measuring surfaces may be approximately the same. For example, the protective arrangement 1 may comprise two sensor arrangements 20 and two sensor channels 60, as shown in Figs. 3a and 6, wherein the sensor arrangements 20 are inserted into a respective sensor channel 60 such that one sensor arrangement is positioned on the left side of the croup and the other sensor arrangement 20 is positioned on the right side of the croup.

The processing circuitry 40 is located in vicinity of the withers, as shown in Figs. 5a-b. However, in another embodiment, the processing circuitry 40 may be placed at location within the wearable protective cover 10 corresponding to another location of the horse.

The wearable protective cover 10 may comprise a heart rate sensor arrangement 50, as shown in Fig. 5b. The heart rate sensor arrangement comprises at least one heart rate measuring surface 51, which at least one heart rate measuring surface is arranged on or within said wearable protective cover 10, and wherein the at least one hart rate measuring surface 51, in use, has a position on or within the wearable protective cover corresponding to a location 71 behind one of the front legs of the horse or in the vicinity of that location, as shown in Figs. 4a and 4c.

In another embodiment, not shown in any of the figures, the at least one hart rate measuring surface 51, in use, may have a position on or within the wearable protective cover 10 corresponding to a location on the chest of the horse or in the vicinity of that location.

The heart rate sensor arrangement 50, shown in Fig. 5b, is configured for measuring the heart rate of the horse and convert the measured heart rate into a sensor signal. The heart rate sensor arrangement 50 is connected to the processing circuitry 40 and the processing circuitry 40 is configured to convert the sensor signal to heart rate data and output said data as a wireless signal 81.

The wearable protective cover may comprise a respiratory rate sensor arrangement. The respiratory rate sensor arrangement may have the same placement as the heart rate sensor arrangement described above 50.

In another embodiment, the heart rate sensor arrangement 50 and/or respiratory sensor arrangement may be located at a location corresponding to the chest of the horse.

With reference to Fig. 6, the protective cover 10 is shown in a flat-laid state viewed from above. The top surface 11 may be made out of a material which is water resistant, or the top surface 11 may be made out of a material which have good liquid wicking properties. It is to be understood that the material of the top surface 11, and bottom surface 12, preferably is adapted to the use of the wearable protective cover 10, e.g., indoor, or outdoor use.

The connection portion 17 is attached to a front portion of the rear part 13 and the tail part 18 is attached to a rear end of the rear part 13. The wearable protective cover shown in Fig. 6, comprises two sensor channels whereas the sensor arrangement 20 may be inserted into.

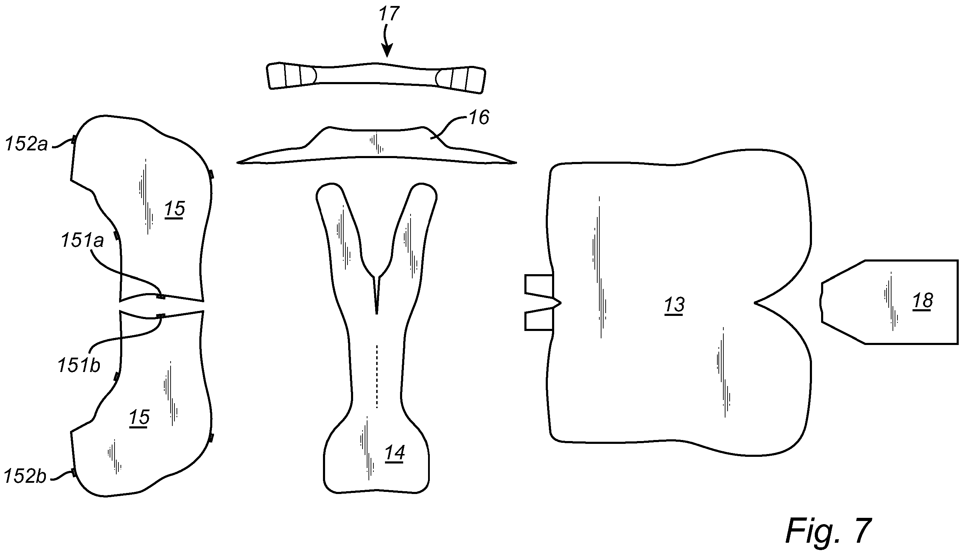

With reference to Fig. 7, the different parts of a wearable protective cover according to one example is shown. The parts of the wearable protective cover may comprise the same material or different types of material. The parts of the wearable protective cover 10 may comprise one or more layers of the same or different types of materials. The number of layers may vary between the different parts, or they may be the same number.

The neck parts 15 are arranged to be connected to each other at a first end 151a, 151b by being sown together and at a second end 152a, 152b by, e.g., Velcro, strings, surcingle buckle or any other type of buckle.

A connection portion 17 is attached e.g., sown to a connector part 16 which may be sown to the rear part 13, as seen in Fig. 6, and may optionally comprise two buckle straps which are connected to the front part 14. The connection portion 17 may be attached by alternative means for fastening such as Velcro, strings, surcingle buckle or any other type of buckle. The connection portion 17 is preferably located, when used, on the withers and may partially extend down along the shoulders of the horse where it connects with the front part 14. The rear part 13 may comprise side connectors 131 which are configured to be connected to the front part 14 on each side of the horse directly or indirectly by e.g., a blanket girth. As shown in Fig. 1c, a tail part 18 is optionally connected to the rear part 13 and the rear part 13 preferably comprises a slit arranged at a position corresponding to the location of the dock of the horse. The slit may be tightened or released by adjusting the band 19 arranged in the slit, as shown in Fig. 1c.

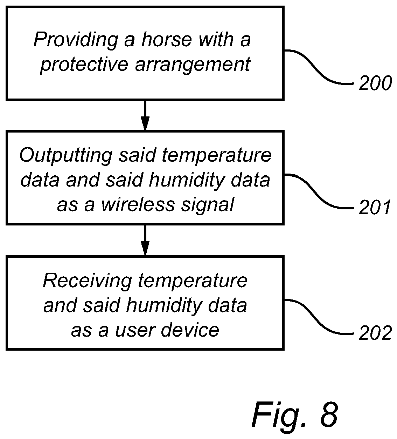

With reference to Fig. 8, the caretaker of the horse provides 200 the horse with the protective arrangement 1 shown in Figs. 1a-c and 3a. The sensor arrangement 20 may be turned on by e.g., a manual switch on the protective arrangement 1 or by the user device 80. The sensor arrangement 20 then starts to measure the temperature and humidity under or within the wearable protective cover 10 and outputting sensor signals to the processing circuitry 40. The sensor signals correspond to the measured temperature and measured humidity. The processing circuitry 40 converts the senor signals to temperature data and humidity data and output 201 the temperature and humidity data as a wireless signal 81 from said protective arrangement 1. The temperature and humidity may be output as a value corresponding to the measured temperature and humidity, respectively; and/or as a difference after the temperature and/or humidity has been compared to another value (e.g. the temperature on the top side of the protective cover, and/or as one or more binary values e.g. indicating if the humidity and/or temperature is above or below a predetermined threshold or interval. The sensor arrangement 20 may measure and output data at a pre-set time interval. The pre-set time interval is preferably every 15 minutes, or every 30 minutes, or every 45 minutes, or every hour, or every second hour, or at an interval set by e.g. the user. The measurement frequency may be changed to a desired interval by the user device 80. The sensor arrangement 20 may measure the temperature and humidity when given a commando from the user device 80 performed by the user.

A user device 80 is configured to receive the temperature and humidity information, which temperature and humidity information is based on temperature data and said humidity data. The user device 80 then presents said temperature and humidity information to a user, such that the user may be informed of the temperature and humidity in close proximity of or at the horse so as to enable for the user to take further action in response to the presented information to provide for the wellbeing of the horse

Further, the user device 80 may be used to set threshold values of when the user device 80 is to alert the user of reached limits. The alert may be a push notice in the user device 80 configured to alarm the user that the threshold is reached.

The protective arrangement may output data regarding the battery level of the battery of the protective arrangement 1 as a wireless signal 81 which the user device 80 receives and presents to the user. This allow the user to know when battery needs to be replaced or recharged. The user device 80 may be a dedicated horse monitoring device, a mobile phone, a laptop, or stationary computer.

Even though it is preferred that the protective arrangement is designed in accordance with the disclosure in the detailed disclosure of preferred embodiments and the appended drawings, it should be noted that a specific preferred embodiment of a specific component does not necessarily have to be combined with a specific embodiment of another component. Thus, advantages associated with a specific embodiment, including one or more features, of a specific component may be accomplished even though the other component(s) is/are designed in accordance with the more general disclosure under the summary of the invention rather than being defined in accordance with the specific embodiment disclosed in the detailed description.

It is contemplated that there are numerous modifications of the embodiments described herein, which are still within the scope of the invention as defined by the appended claims.

The wearable protective cover and the sensor arrangement may for instance be sold as separate parts, e.g., a sensor channel and the sensor arrangement may be sold together and be configured to be integrated to a separate wearable protective cover by the consumer. In other words, the protective cover may be one part, marketed by one retailer, and the sensor channel and the sensor arrangement may two other parts, marketed by the same or a different retailer. Once all three parts have been received, the two latter parts may be integrated in the first part wearable protective cover The sensor channel may be designed and configured for being attached to a wearable protective cover by e.g., Velcro, glue, stitches, straps, or other fastening means.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A protective arrangement (1) for a horse, comprising a wearable protective cover (10) for a horse, such as a horse blanket or horse clothing, the wearable protective cover (10) comprising:
- a top and a bottom surface (11, 12) arranged opposite each other, wherein said bottom surface (12) is adapted to be arranged towards the horse when said wearable protective cover (10) is in use,
- a sensor arrangement (20) comprising:
- a temperature sensor arrangement (21) configured for measuring temperature and converting the measured temperature into a sensor signal, wherein each temperature sensor arrangement (21) is arranged within said wearable protective cover (10), and comprises at least one temperature measuring surface (23), wherein each one of said at least one temperature measuring surface (23) coincides with said bottom surface (12) or is arranged within said wearable protective cover (10), and
- a humidity sensor arrangement (22) configured for measuring humidity and converting the measured humidity into a sensor signal, the humidity sensor arrangement (22) which is arranged within said wearable protective cover (10), and comprises at least one humidity measuring surface (24), wherein each one of said at least one humidity measuring surface (24) coincides with said bottom surface (12) or is arranged within said wearable protective cover (10), and
wherein said protective cover arrangement (1) further comprises a processing circuitry (40), arranged to be connected to said temperature sensor arrangement (21) and to said humidity sensor arrangement (22) and is further arranged to receive said sensor signals corresponding to said temperature and said humidity, wherein said processing circuitry (40) is configured to convert said received sensor signals to temperature data and humidity data corresponding the temperature and humidity measured by said at least one temperature sensor arrangement (21) and said at least one humidity sensor arrangement (22), respectively, and said processing circuitry (40) is further configured to output said temperature data and said humidity data as a wireless signal (81),
wherein at least one of the temperature measuring surfaces (23) and the humidity measuring surface (24), in use, has a position on or within the cover (10) corresponding to a location above the croup of the horse or in the vicinity of that location.

2. The protective arrangement (1) according to claim 1, wherein the sensor arrangement (20) is a self-contained unit, which self-contained unit comprises both said temperature sensor arrangement (21) and said humidity sensor arrangement (22), and wherein said temperature measuring surface (23) and said humidity measuring surface (24) optionally are one and the same.

3. The protective arrangement (1) according to claim 1 or 2, wherein the temperature sensor arrangement (21) and/or the humidity sensor arrangement (22) are flexible.

4. The protective arrangement (1) according to any of the proceeding claims, wherein the sensor arrangement (20) comprises a first and a second measurement surface, wherein each of said first and second measurement surface is a temperature measurement surface (23) and/or a humidity measurement surface (24),
wherein said first measurement surface, in use, has a position on or within the cover (10) corresponding to a location above the croup of the horse or in the vicinity of that location, and said second measurement surface, in use, has a position on or within the cover (10) corresponding to a location in the vicinity of the withers of the horse.

5. The protective arrangement (1) according to any of the proceeding claims, wherein the temperature sensor arrangement (21) and/or the humidity sensor arrangement (22) comprises a carrier or enclosure, which carrier or enclosure is made of PET, TPU, or Kaptone and wherein said carrier or enclosure is optionally at most 8 mm in a direction orthogonal to said bottom surface (12).

6. The protective arrangement (1) according to any of the proceeding claims, wherein the sensor arrangement (20) is adapted and configured to be detached from, and optionally reattached to, the wearable protective cover (10), wherein the attachment of the sensor arrangement (20) to the wearable protective cover (10) is optionally arranged such that a removal of sensor arrangement (20) leaves an opening is said bottom surface (12).

7. The protective (1) arrangement according to any of the proceeding claims, wherein the protective arrangement (1) further comprises an interface for allowing external sensors to be connected and to interact with the protective arrangement (1).

8. The protective arrangement (1) according to any of the proceeding claims, wherein the protective arrangement (1) further comprises a rechargeable battery and/or at least one solar cell adapted and configured for powering said temperature sensor arrangement (21) and said humidity sensor arrangement (22).

9. The protective arrangement (1) according to claim 8, wherein the protective arrangement (1) further comprises solar cells which solar cells coincide with the top surface (11) or is arranged within the wearable protective cover (10) beneath a transparent part of the top surface (11).

10. The protective arrangement (1) according to any of the proceeding claims, wherein the wearable protective cover (10) further comprises a heart rate sensor arrangement (50), the heart rate sensor arrangement (50) comprises at least one heart rate measuring surface (51), which at least one heart rate measuring surface (51) is arranged on or within said wearable protective cover (10), and
wherein the at least one hart rate measuring surface (51), in use, has a position on or within the wearable protective cover (10) corresponding to a location behind one of the front legs of the horse or in the vicinity of that location.

11. A method of monitoring parameters related to a horse, the method comprising:
- providing (200) a horse with a protective arrangement (1) according to any of the claims 1-10,
- outputting (201) said temperature data and said humidity data as a wireless signal (81) from said protective arrangement (1),
- receiving (202) temperature and humidity information at a user device (80), which temperature and humidity information is based on temperature data and said humidity data, which user device (80) presents said temperature and humidity information to a user.

12. A method according to claim 11, wherein the step of receiving said temperature and humidity information at a user device (80) comprises the steps of:
- receiving said wireless signals (81) at a server,
- converting said wireless signals (81) to temperature and humidity information,
- outputting said temperature and humidity information from said server to said user device (80).

13. A method according to claim 11 or 12, wherein said user device (80) is a dedicated horse monitoring device, a mobile phone, a laptop or stationary computer.

14. A system for monitoring parameters related to a horse, the system comprising:
a protective arrangement (1) according to any of the claims 1-10, configured to output wireless signals (81) based on the temperature data and the humidity data measured by the sensor arrangement 20,
a user device (80) configured to receive said wireless signal (81) and present said temperature and humidity data to a user.
